# EUROPEAN PATENT APPLICATION

(11) **EP 4 195 122 A1**
(43) Date of publication of application: **14.06.2023**
(21) Application number: 21213492.8
(22) Date of filing: 09.12.2021
(51) Int. Cl.: G06Q 10/08, G01S 1/70, G01S 5/16

(54) **ASSET LOCATION METHOD**

(71) Applicant: Nagravision Sàrl, 1033 Cheseaux-sur-Lausanne (CH)
(72) Inventor: GRADASSI, Luca, 1033 Cheseaux-sur-Lausanne (CH); CONUS, Joël, 1033 Cheseaux-sur-Lausanne (CH); PRISI, Marcel, 1033 Cheseaux-sur-Lausanne (CH); ANTOINE, Sidot, 1033 Cheseaux-sur-Lausanne (CH); BAHROUN, Aymen, 1033 Cheseaux-sur-Lausanne (CH)
(74) Representative: Mewburn Ellis LLP

(57) **Abstract**

A method for locating an asset in an environment, the method comprising. The method comprises capturing, with a camera, a first image of the asset, wherein in the first image, a light source positioned on or adjacent to the asset is in a first state; capturing, with the camera, a second image of the asset, wherein in the second image, the light source is in a second state; and determining the location of the asset in the environment based on the first image, second image and camera-specific information.

## Description

### Field of the Invention

The present invention relates to a method for locating an asset and a system for locating an asset. Particularly, although not exclusively, the present invention relates to a method for locating an asset using a camera and a light source.

### Background

In many environments, such as warehouses, there is a need to efficiently locate an asset in the environment. For example, in a warehouse environment, there may be multiple assets (e.g. objects) in the warehouse and the correct asset needs to be found quickly.

Conventionally, humans were tasked with finding the correct asset in an environment such as a warehouse. This often involved maps of the environment, which mapped the location of different assets in the environment. The user could then follow the map to locate the required asset. However, this approach is labour intensive, and thus inefficient.

It is known to track assets using GPS (Global Positioning System). A GPS tag positioned on the asset communicates with relevant satellites such that the asset can be located wherever they are positioned around the world. GPS provides live tracking of assets, and is thus especially useful for tracking assets in transit, such as rental cars. However, GPS tracking can be costly to implement, especially in a warehouse or indoor environment. Furthermore, GPS tracking of assets cannot provide and accurate or precise location in an indoor environment such as a warehouse. For example, GPS trackers may only be accurate to within 3-5m. In a warehouse environment, although the GPS tracking may locate the asset to within 3-5m, a human would still need to manually find the asset within that area. This leads to inefficient asset location.

It is also known to use radio frequency technology to locate assets in an environment. In particular, a radio-frequency tag may be positioned on the asset, and the location of the asset may be determined based on a Relative Signal Strength Indication (RSSI) value measured by a receiver. Bluetooth Low Energy (BLE) or Near Field Communication (NFC) technology may be used to locate assets in this way. Although these approaches are less costly than GPS, they are still not precise or accurate enough to provide efficient location of assets in an indoor environment such as a warehouse.

The present invention has been devised in light of the above considerations.

### Summary of the Invention

According to a first aspect, there is provided a method for locating an asset in an environment, the method comprising:
capturing, with a camera, a first image of the asset, wherein in the first image, a light source positioned on or adjacent to the asset is in a first state;
capturing, with the camera, a second image of the asset, wherein in the second image, the light source is in a second state different from the first state; and
determining the location of the asset in the environment based on the first image, second image and camera-specific information.

In this way, a precise location of the asset can be found using simple infrastructure; a light source and a camera. In particular, a precise location of the asset in the images can be inferred from the change in the captured image of the light source from the first to the second state, using the camera-specific information. By using the first and second images to determine the location of the asset, a relatively low-resolution camera may be used. As such, in e.g. a warehouse environment, a precise location of a required asset in a warehouse can be found and then provided to an operator, such that the operator is able to efficiently locate the required asset. Similarly, in a hospital or airport environment, a precise location of the required asset in the hospital or airport can be found such that the asset can be efficiently located.

Optional features will now be set out. The following optional features are combinable singly or in combination with any aspect of the invention.

It is to be understood that an image of the asset is an image including the asset.

The camera-specific information may be information relating to the camera. The camera-specific information may include information from which a position of the camera may be inferred. The camera-specific information may include information from which a field of view of the camera may be inferred.

In particular, the camera-specific information may relate to, or include, a position of the camera and/or a field of view of the camera. The camera-specific information may further comprise a resolution of the camera.

The first image and second image may be captured in any order. For example, the first image may be captured before the second image, or the second image may be captured before the first image. The position of the camera may be maintained as constant between the capturing of the first image and the second image. In particular, the camera may have a fixed position. Similarly, the field of view of the camera may be maintained as constant between the capturing of the first and second images.

A plurality of assets may be located in the environment, and the method may be for locating an asset from the plurality of assets in the environment. Each of the plurality of assets may have a corresponding light source positioned thereon or adjacent thereto.

The environment may an inside space, such as a room, or a warehouse, for example. The environment may be (part of) a hospital, an airport, or a server farm, for example.

It is to be understood that the light source should be positioned such that it is visible to the camera. For example, in a warehouse environment, the light source may be positioned on a pallet or container holding the asset, or on a shelf upon which the asset is positioned.

Preferably, in the first state, the light source may be switched off, and in the second state, the light source may be switched on (or vice versa). Alternatively, the first and second state may be different light intensities, or different colours for example.

The light source(s) may be a visible light source (e.g. light having one or more wavelengths between 400nm and 750nm). In this way, as the light source positioned adjacent to or on the asset is switched between the first and second states, e.g. off and on (in order for images to be taken with the light source switched off and on), a secondary indicator is provided to the user of the location of the asset. In particular, an operator may be able to locate the asset visually by watching a light source switch between the two states (or vice versa). The light source may be a white light source.

The light source(s) may be an infrared light source.

The light source(s) may be a light emitting diode (LED) or a laser for example.

Determining the location of the asset in the environment may comprise determining the coordinates of the asset in the environment (e.g. in a 2D or 3D coordinate system defining the environment).

The step of determining the location of the asset in the environment may be performed by one or more processors.

The one or more processors may be located at a remote computing device or server, for example. As such, the method may comprise transmitting, to a remote server, the first and second images for processing.

Preferably, the one or more processors may be located in the environment (e.g. in the warehouse, hospital, or airport). For example, the one or more processors may be located at the camera such that the step of determining the location of the asset in the environment may be performed at, or in, the camera. The one or more processors may be located in a computing device connected to the camera, e.g. via a wired connection.

In this way, there is no requirement to transmit the first and second image to a remote computing device or server, thus improving security, and also efficiency of the processing.

Optionally (e.g. if the location of the asset in the environment is determined by a processor in the environment, for example at the camera) the determined location (e.g. coordinates) of the asset in the environment may be transmitted to a remote server.

Preferably, determining the location of the asset may comprise determining the location of the light source in the second image by subtracting the first image from the second image. Subtracting the first image from the second image may include subtracting the digital numeric value of a plurality of pixels in the first image from the digital numerical value of the corresponding pixels in the second image.

In this way, a precise location of the asset in the second image may be determined, by approximating the location of the light source in the second image as the location of the asset in the second image.

In particular, the location of the asset in the environment may then be extrapolated based on the determined location of the light source in the second image and the camera-specific information.

Determining the location of the light source in the second image may be performed at the camera, or in another computing device or processor located in the environment. Then, the location of the light source in the second image may be transmitted to a remote server, and the remote server may then determine the location of the asset in the environment based on the determined location of the light source in the second image and the camera-specific information.

The method may further comprise calibrating the camera. Calibrating the camera may be used to determine the camera-specific information, such as the position of the camera in the environment (e.g. coordinates of the camera in the 2D or 3D coordinate system defining the environment), and/or the field of view of the camera.

Calibrating the camera may additionally/alternatively be used to compensate for lens distortion (e.g. to remove lens distortion).

Calibration may be manual (e.g. by a user), or automated.

For example, the camera may be calibrated using visual signalling, such as one or more markers located in the environment. The position, size and/or shape of the one or more markers may be predefined/known, in order to calibrate the camera. The markers may be bar codes, or QR-codes, for example. Alternatively/additionally, the camera may be calibrated using one or more additional calibrated cameras (e.g. by using the known positions of the one or more additional cameras).

The camera-specific information may be stored at the camera or in another storage device in the environment (e.g. at a local storage device), and or at a remote location (e.g. a remote server).

The method may further comprise, prior to the second image being captured, instructing the light source to be in the second state, e.g. to switch from the first state (e.g. off) to the second state (e.g. on). This may be performed by the one or more processors (e.g. located in the environment, such as at the camera). Instructing the light source to be in the second state (e.g. switched on) may be by a radio frequency (RF) signal.

The method may further comprise instructing the light source to be in the first state (e.g. switched off). This may be prior to the first image being captured and/or after the second image is captured.

Optionally, the environment may comprise a plurality of cameras (the plurality of cameras including the camera which captures the first and second images of the asset). The light source may be visible to one or more of these cameras.

Optionally, the method may further comprise:
capturing, with a second camera, a third image of the asset, wherein in the third image, the light source positioned on or adjacent to the asset is in the first state;
capturing, with the second camera, a fourth image of the asset, wherein in the fourth image, the light source is in the second state; and
determining the location of the asset in the environment based on the first image, second image, third image and fourth image, and camera-specific information.

Here, the camera-specific information may include information relating to the second camera (e.g. in addition to information relating to the first camera described above). For example, the camera-specific information may include information relating to a position and field of view of the second camera.

By utilizing two (or more) cameras to capture the location of the light source, a more accurate location (e.g. coordinates of the asset) of the asset in the environment (e.g., a hospital, warehouse, airport, server farm, etc.) can be determined. Furthermore, using two or more cameras allows for an accurate location in 3D space to be determined.

Preferably, the method may comprise, prior to capturing the first and second images, estimating an approximate position of the asset in the environment. The approximate position of the asset may be estimated using RF signals, e.g. a measure of received signal strength indicator (RSSI), or Bluetooth ^{™}, for example. The approximate position of the asset in the environment may be used to select the camera (e.g. from the plurality of cameras in the environment) for capturing the first and second images.

Optionally, the method may further comprise receiving information encoded into the light transmitted from the light source (e.g. in the infrared spectrum). The information may be encoded by the light flashing/blinking, e.g. using Morse Code. The information may include information relating to the asset; e.g. what the asset is, a type of asset etc. As such, the method may further comprise encoding, by the light source, information relating to the asset into the light transmitted therefrom.

In this way, not only does the light source perform a primary role in locating the asset, but it also provides information about the asset e.g. to the one or more processors.

Preferably, the location (e.g. coordinates) of the asset in the environment, as determined by these methods, is output as feedback to a user. For example, the determined location may be output for display, e.g. to a display screen, a mobile device, a computer device etc. In this way, a user (e.g. operator of a warehouse, airport, or hospital) is provided with the location of the asset such that they can find the asset more efficiently.

According to a second aspect, there is provided a system configured to perform the method of the first aspect.

As such, there is provided a system for locating an asset in an environment, the system comprising a camera and one or more processors, wherein:
the camera is configured to:
   capture a first image of the asset, wherein in the first image, a light source positioned on or adjacent to the asset is in the first state; and
   capture a second image of the asset, wherein in the second image, the light source positioned on or adjacent to the asset is in the second state; and
the one or more processors are configured to:
   determine the location of the asset in the environment based on the first image, second image and camera-specific information.

The camera-specific information may include information from which a position of the camera may be inferred. The camera-specific information may include information from which a field of view of the camera may be inferred.

In particular, the camera-specific information may relate to, or include, a position of the camera and/or a field of view of the camera.

The one or more processors may be located at a remote computing device or server. As such, the camera may be configured to transmit the first and second images for processing at a remote server.

The one or more processors may be located in the environment (e.g. located in a computing device connected to the camera e.g. via a wired connection, or at/in the camera itself).

If the location of the asset in the environment is determined at the camera, the camera may be configured to transmit the determined location (e.g. coordinates) of the asset in the environment to a remote server.

The system may comprise a plurality of cameras configured to capture images of the asset.

In particular, a second (further) camera may be configured to capture (i) a third image of the asset, wherein in the third image, the light source positioned on or adjacent to the asset is in the first state, and (ii) a fourth image of the asset, wherein in the fourth image, the light source is in the second state. The one or more processors may then be configured to determine the location of the asset in the environment based on the first image, second image, third image and fourth image, and the camera-specific information.

The camera-specific information may include information relating to the second camera (e.g. in addition to information relating to the first camera described above). For example, the camera-specific information may include information relating to a position and field of view of the second camera.

The system may further comprise the light source (e.g. a light source positioned on or adjacent to the asset to be located). The light source may be configured to switch between the first and second states upon instruction from the one or more processors to do so. The light source may be configured to encode information relating to the asset into the light transmitted therefrom.

It is to be understood that the light source should be positioned such that it is visible to the camera. For example, in a warehouse environment, the light source may be positioned on a pallet or container holding the asset, or on a shelf upon which the asset is positioned.

Preferably, in the first state, the light source may be switched off, and in the second state, the light source may be switched on (or vice versa). Alternatively, the first and second state may be different light intensities, or different colours for example.

The light source(s) may be a visible light source (e.g. light having one or more wavelengths between 400nm and 750nm). In this way, as the light source positioned adjacent to or on the asset is switched between the first and second states, e.g. off and on (in order for images to be taken with the light source switched off and on), a secondary indicator is provided to the user of the location of the asset. In particular, an operator may be able to locate the asset visually by watching a light source switch between the two states (or vice versa). The light source may be a white light source.

The light source(s) may be an infrared light source.

The light source(s) may be a light emitting diode (LED) or a laser for example.

The system may comprise a plurality of light sources, each corresponding to a respective asset (e.g. located adjacent to or on a respective asset).

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
Figure 1 is a flow diagram of a method for locating an asset in an environment;
Figure 2 is a schematic diagram of a system for locating an asset in an environment, for example by the method of Figure 1; and
Figure 3 is a schematic diagram of another system for location an asset in an environment.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

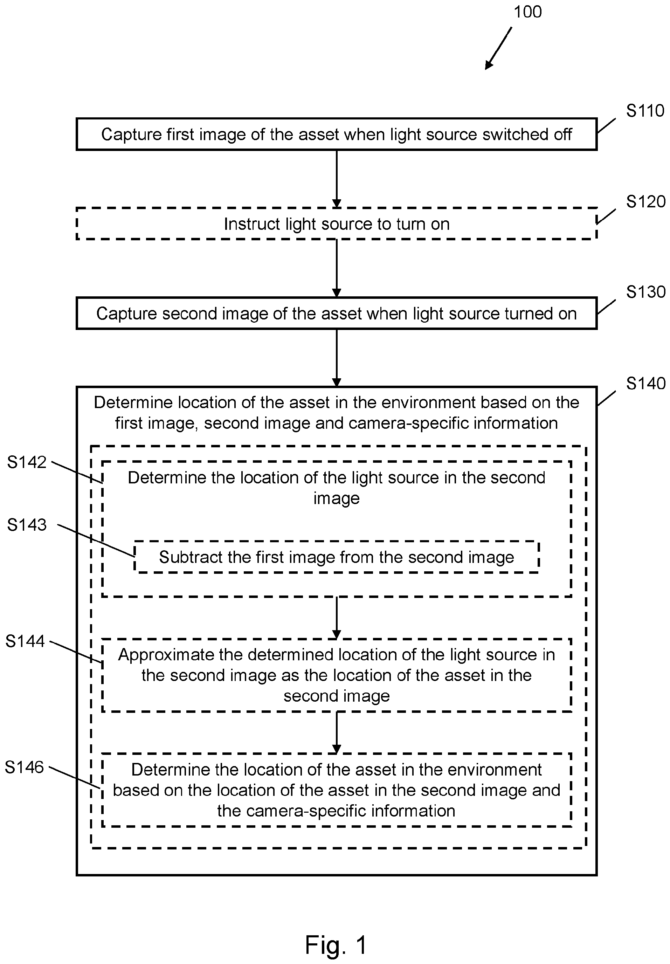

Figure 1 is a flow diagram of a method 100 for locating an asset in an environment, such as a warehouse, airport, or hospital.

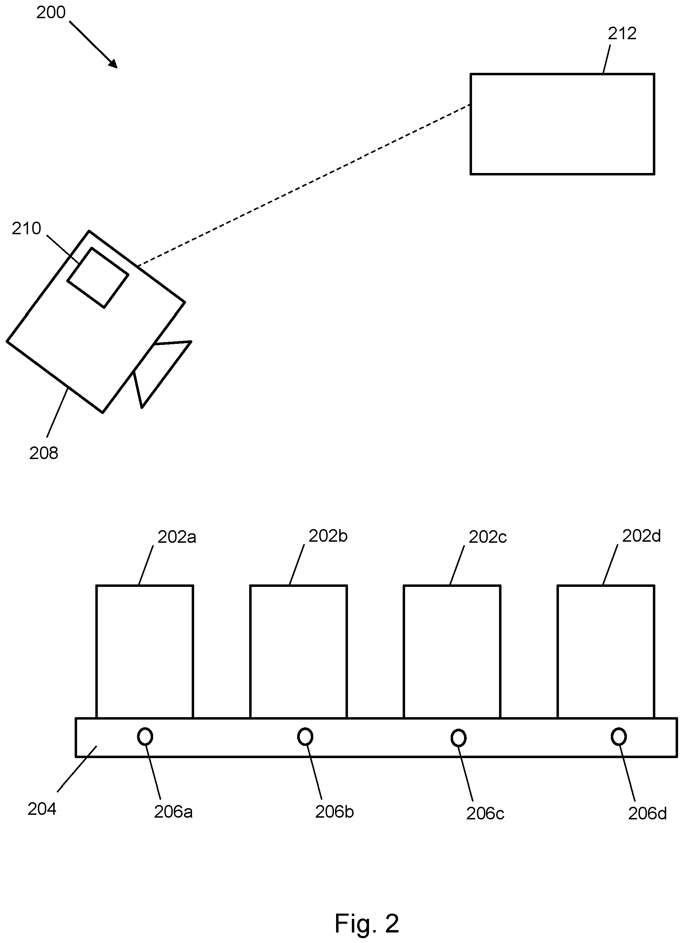

Figure 2 schematically illustrates an example system 200 for locating an asset in an environment, such as a warehouse, airport, or hospital. The environment includes a plurality of assets 202a-202d. Although only 4 assets are shown in Figure 2, it is to be understood that there may be many more assets, e.g. hundreds or thousands of assets, in the environment. With increasing numbers of assets in the environment, or with an increasing size of the environment, it is increasingly difficult to quickly find the correct asset from the plurality of assets with conventional methods.

Each asset 202a-202d in the environment has a respective light source 206a-206d, such as an LED, positioned adjacent thereto, on the shelf 204 upon which the asset is located. In other examples, the light source may be positioned on the asset itself, or on a container containing the asset etc. It is preferable to have the light source positioned as close to the corresponding asset as possible, as the location of the light source indicates the location of the asset.

A camera 208 is positioned in the environment and positioned such that one or more (or all) of the light sources 206a-206d are visible in the camera's field of view. The camera 208 is therefore able to capture images which include the light source and the corresponding asset.

The camera 208 includes a processor 210, e.g. microcontroller, for controlling operations of the camera, and for performing at least part of method 100.

Before method 100 begins, all of the light sources 206a-206d are turned off.

At S110, the camera 208 captures a first image in which all of the light sources 206a-206d are switched off. In an example, the camera 208 is positioned to capture an image including all of the assets 202a-202d (and therefore all of the light sources 206a-206d).

At S120, the processor 210 instructs the light source 206b corresponding to the asset 202b which an operator wants to find in the environment, to switch on. This may be performed by transmitting a RF signal from the camera 208 (or another transmitted located in the environment) to the light source 206b, wherein an RF tag at the light source is configured to receive the RF signal, and turn the light source 206b on in response. None of the other light sources 206a, 206c, 206d turn on in response to the RF signal. Thus, light source 206b is turned on, and the remaining light sources maintained switched off. Then, at S130, the camera 208 captures a second image. The camera 208 maintains stationary and does not alter its field of view between taking the first and second images.

In the second image, light source 206b is switched on but the other light sources are switched off.

At S140, the processor 210 determines the location (e.g. coordinates) of the asset 202b in the environment based on the first image, second image and camera-specific information.

In some examples, this camera-specific information includes the field of view of the camera and the position of the camera. This information may be stored on the camera 208 itself, or may be retrieved from a remote server 212.

In some examples, the field of view and position of the camera 208 may be determined by the processor 210 e.g. by calibrating the camera 208. The camera 208 may be calibrated using markers positioned in the environment (not shown). These markers may be QR codes or barcodes, which can be read by the camera 208, and from which the precise location and field of view of the camera 208 can be determined.

The location (e.g. coordinates) of the asset 202b in the environment may be determined by the following steps.

At S142, the location (e.g. coordinates) of the light source in the second image may be determined by the processor 210. This may be achieved by subtracting the first image (in which the light source 206b is off) from the second image (in which the light source 206b is on). By subtracting the first image from the second image, any common features are removed in the resulting image, and only differences between the two images remain. The change from the light source 206b switching from off to on is a difference between the two images, and thus the light emitted from the light source is maintained in the resulting image. As none of the other lights 206a, 206c, 206d are switched off in both the first and second image, these light sources are not visible in the resulting subtracted image.

For completeness, in some examples, the second image may be subtracted from the first image. Furthermore, the light source may not necessarily switch between on and off between the two images; instead the difference may result from different intensities, or different colours.

The resulting image from the subtraction therefore includes the location (e.g. coordinates) of the light source 206b in the second image. The location (e.g. coordinates) of the light source 206b in the second image may be approximated (e.g. taken as) the location of the asset 202b in the second image (see S144 in Figure 1).

The processor 210 (or remote server 212) may also compensate for lens distortion.

At S146, the processor 210 determines the location (e.g. coordinates) of the asset 202b in the environment based on the location (e.g. coordinates) of the asset 202b in the second image (from S144) and the camera-specific information. In particular, if the position of the camera 208 and the field of view of the camera 208 are known, the processor 210 can calculate the location (e.g. coordinates) of the asset 202b in the environment from the location (e.g. coordinates) of the asset 202b in the second image. Although not shown in Figure 1, the location (e.g. coordinates) of the asset 202b in the environment may be output as feedback to an operator. The coordinates may be output for display on a display screen in the environment, or at a mobile device of the operator. The location of the asset 202b on a map of the environment may be output. Directions to the asset 202b from the operator's current location may be output.

In some examples, the light source 206b may encode information into the light transmitted therefrom. This information may be encoded by the light flashing or blinking e.g. using Morse Code or some other code. The information may relate to the asset corresponding to the light source 206b, e.g. what type of asset it is. The encoded information is therefore received by the camera 208, and may be output to an operator along with the location of the asset 202b.

For completeness, any part, or all, of the processing performed by processor 210 in the camera 208 may be performed at another computing device in the environment, and/or at the remote server 212 instead. In some examples, the system 200 may not include a server 212.

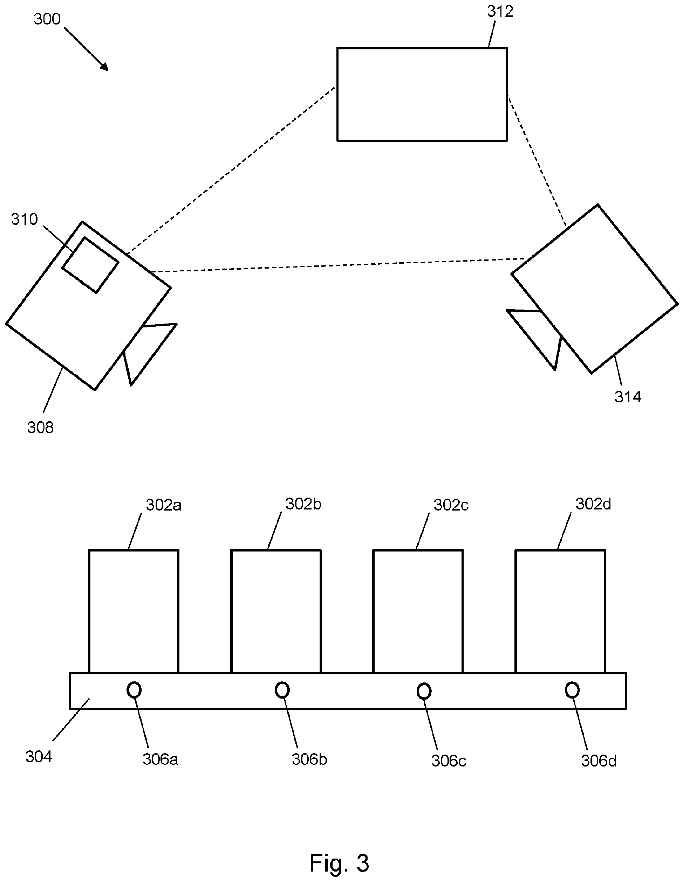

Figure 3 schematically illustrates another system 300 for locating an asset in an environment. System 300 is similar to system 200, in that it includes a plurality of assets 302-302d positioned on a shelf 304, wherein each asset has a corresponding light source 306a-306d. The system 300 also includes a remote server 312, and camera 308 with processor 310.

System 300 includes a second camera 314. The second camera may be able to communicate (e.g. wirelessly) with both the first camera 308 and the remote server 312. The system 300 may include more than two cameras. All of the assets in the environment may be in the field of view of at least one of the cameras.

The processor 310 (or remote server 312) may be configured to select which camera 308, 314 to select for taking the first and second images of the asset 306b. In particular, prior to capturing the first and second images, an approximate position of the asset in the environment may be determined. This approximate position may be determined using RF signals, e.g. a measure of RSSI. Based on the approximate position of the asset 306b, one (or more) of the cameras 308, 314 may be selected (e.g. the camera(s) which best captures the asset in their field of view based on the approximate position of the asset 306b).

In some examples, two or more cameras may be used to determine the location of the asset with more accuracy, and to determine an accurate location in 3D space.

The second camera 314 may be used to capture images alongside those captured by the first camera 308. In particular, whilst the light source 306b is switched off, and at the same or similar time as the first camera 308 capturing the first image (e.g. in S110 of Figure 1), the second camera 314 may capture a third image of the asset.

Then, after the light source 306b is switch on (in S120 of Figure 1), and when the first camera is capturing the second image (e.g. S130 of Figure 1), the second camera 314 may capture a fourth image of the asset.

Then, the four images may be used to determine the location of the asset in the environment. The location of the asset in the environment may be determined using the first and second images and the camera-specific information relating to the first camera 308, as set out above in relation to S140. Furthermore, the location of the asset in the environment may also be determined using the third and fourth images and camera-specific information relating to the second camera 314. The two determined locations of the asset in the environment may be used to determine a more accurate location of the asset (e.g. by averaging), or my cross-referencing the coordinates in 3D space, for example).

Similarly to as set out above), this (more accurate) location of the asset (e.g. 3D coordinates) may then be output for display, so an operator can accurately locate the asset in the environment, and therefore find and retrieve the asset more quickly.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the embodiments described above, many equivalent modifications and variations will be apparent to those skilled in the art when given this disclosure. Accordingly, the embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A method for locating an asset in an environment, the method comprising:
capturing, with a camera, a first image of the asset, wherein in the first image, a light source positioned on or adjacent to the asset is in a first state;
capturing, with the camera, a second image of the asset, wherein in the second image, the light source is in a second state; and
determining the location of the asset in the environment based on the first image, second image and camera-specific information.

2. The method of claim 1, wherein the camera-specific information includes a position of the camera and a field of view of the camera.

3. The method of claim 1 or claim 2, wherein in the first state, the light source is switched off, and in the second state, the light source is switched on.

4. The method of any preceding claim, wherein determining the location of the asset in the environment comprises:
determining a location of the light source in the second image by subtracting the first image from the second image,
wherein determining the location of the asset in the environment is based on the determined location of the light source in the second image, and the camera-specific information.

5. The method of any preceding claim, further comprising calibrating the camera.

6. The method of claim 5, wherein the camera is calibrated to:
determine the position of the camera in the environment;
determine the field of view of the camera in the environment; and/or
compensate for lens distortion.

7. The method of any preceding claim, wherein determining the location of the asset in the environment is performed at the camera.

8. The method of any preceding claim, further comprising, prior to the second image being captured, instructing the light source to switch from the first state to the second state.

9. The method of any preceding claim, further comprising:
capturing, with a second camera, a third image of the asset, wherein in the third image, the light source positioned on or adjacent to the asset is in the first state;
capturing, with the second camera, a fourth image of the asset, wherein in the fourth image, the light source is in the second state; and
determining the location of the asset in the environment based on the first image, second image, third image and fourth image, and the camera-specific information.

10. The method of any preceding claim, further comprising, prior to capturing the first and second images, estimating an approximate position of the asset in the environment.

11. The method of any preceding claim, further comprising:
receiving information encoded into the light transmitted from the light source, wherein the information relates to the asset.

12. A system for locating an asset in an environment, the system comprising a camera and one or more processors, wherein:
the camera is configured to:
capture a first image of the asset, wherein in the first image, a light source positioned on or adjacent to the asset is in the first state; and
capture a second image of the asset, wherein in the second image, the light source positioned on or adjacent to the asset is in the second state; and
the one or more processors are configured to:
determine the location of the asset in the environment based on the first image, second image and camera-specific information.

13. The system of claim 12, further comprising a second camera, wherein:
the second camera is configured to:
capture a third image of the asset, wherein in the third image, the light source positioned on or adjacent to the asset is in the first state;
capture a fourth image of the asset, wherein in the fourth image, the light source is in the second state; and
the one or more processors are configured to:
determine the location of the asset in the environment based on the first image, second image, third image and fourth image, and the camera-specific information.

14. The system of claim 12 or claim 13, further comprising a light source positioned on or adjacent to the asset to be located.

15. The system of claim 14, wherein the light source is configured to switch between the first and second states upon instruction from the one or more processors.
